# EUROPÄISCHE PATENTSCHRIFT

(11) **EP 3 728 821 B1**
(45) Veröffentlichungstag und Bekanntmachung des Hinweises auf die Patenterteilung: **19.06.2024**
(21) Anmeldenummer: 18826999.7
(22) Anmeldetag: 13.12.2018
(51) Int. Cl.: F02M 26/48, F16K 31/524, F16K 31/53, F16K 31/04, F02M 26/54, F02M 26/67, F16H 1/20, F16K 31/50, F16H 55/17

(54) **VENTILVORRICHTUNG FÜR EINE VERBRENNUNGSKRAFTMASCHINE**
VALVE DEVICE FOR AN INTERNAL COMBUSTION ENGINE
DISPOSITIF DE VANNE POUR UN MOTEUR À COMBUSTION INTERNE

(30) Priorität: 18.12.2017 DE 102017130323
(43) Veröffentlichungstag der Anmeldung: 28.10.2020
(73) Patentinhaber: Pierburg GmbH, 41460 Neuss (DE)
(72) Erfinder: SIMONS, Norbert, 41460 Neuss (DE); HEMSING, Axel, 41460 Neuss (DE); PAFFRATH, Holger, 41460 Neuss (DE)
(74) Vertreter: terpatent Patentanwälte und European Patent Attorneys ter Smitten Eberlein -Van Hoof
(86) Internationale Anmeldenummer: PCT/EP2018/084683
(87) Internationale Veröffentlichungsnummer: WO 2019/121286

(56) Entgegenhaltungen:
- EP-A2- 2 884 086
- WO-A1-2017/037065
- US-A1- 2014 260 726
- US-B2- 8 651 455

## Beschreibung

Die Erfindung betrifft eine Ventilvorrichtung für eine Verbrennungskraftmaschine mit einem Aktuator, der einen Elektromotor, ein Getriebe mit einem Kronenradsegment und ein Federelement aufweist sowie einer Ventileinheit mit einer Ventilstange und einem auf der Ventilstange angeordneten Ventilschließglied, welches mit einem Ventilsitz zusammenwirkt, der einen Durchströmungsquerschnitt zwischen einem Einlass und einem Auslass begrenzt.

Derartige Ventilvorrichtungen für Verbrennungskraftmaschinen werden in verschiedenen Ausführungen beispielsweise im Abgasbereich genutzt. Insbesondere sind als Hubventil ausgeführte Abgasrückführventile bekannt, die der Reduktion von Abgasemissionen dienen. Dabei werden an den jeweiligen Betriebszustand der Brennkraftmaschine angepasste Abgasmengen zur Reduzierung der umweltschädlichen Anteile in die Zylinder der Verbrennungskraftmaschine zurückgeführt und einer erneuten Verbrennung zugeführt. Diese Ventile werden in den letzten Jahren zumeist mittels elektromotorischer Aktuatoren mit einem nachgeschalteten Untersetzungsgetriebe angetrieben, bei denen im Getriebe die rotatorische Bewegung des Elektromotors in eine translatorische Bewegung der Ventilstange umgewandelt wird. Die verwendeten Aktuatoren müssen dabei thermisch hoch belastbar sein, da im Abgasbereich hohe Temperaturen auf die Elektromotoren wirken.

Es sind verschiedene Aktuatoren aus dem Stand der Technik bekannt. So wird beispielsweise in der US 2014 260 726 A1 ein Aktuator beschrieben, der für verschiedene Anwendungen einsetzbar sein soll. Der hierin beschriebene Aktuator nutzt ein Kronenradgetriebe um eine zueinander senkrechte Anordnung einer Antriebswelle zu einer Ausgangswelle zu ermöglichen, wobei ein mehrstufiges Getriebe verwendet wird. Dieses Getriebe weist ein Kronenrad auf, welches mit Stirnzahnrädern zusammenwirkt. Somit ist in einer kompakten Bauform eine zueinander senkrechte Drehachse der Antriebs- und Ausgangswelle möglich, wobei keine Umwandlung von rotatorischen Bewegungen in translatorische Bewegungen stattfindet, welche für eine Ventilhubbetätigung jedoch notwendig wäre.

In der WO 2013 167 704 A1 wird eine Vorrichtung beschrieben, welche eine rotatorische Bewegung einer Antriebswelle in eine weitestgehend translatorische Bewegung einer Ventilstange umwandelt, indem eine zu der Ventilstange senkrechte Achse an der Ventilstange befestigt ist, welche durch eine Kurvenbahnkontur, die in einem Abtriebzahnrad des Getriebes ausgebildet ist, geführt ist. Durch diese Anordnung bewegt sich die Ventilstange weitestgehend translatorisch bei Drehung des Abtriebszahnrades.

In der EP 0 856 657 B1 ist eine Ventilvorrichtung beschrieben, welche eine Rotationsbewegung eines Antriebes in eine translatorische Bewegung eines Betätigungsgliedes mit einem Ventilglied umwandelt, wobei die Umwandlung durch einen drehantreibbaren Nocken mit einer exzentrischen Nockenbahn durchgeführt wird. Hierbei wird das Betätigungsglied durch ein Federelement in die Richtung des Nockens belastet und durch eine Drehung des Nockens gegen die Kraft der Feder ausgelenkt. Eine Rückstellung des Betätigungsgliedes erfolgt dabei ausschließlich durch das Federelement, wodurch es im Falle einer verklemmten oder gerissenen Feder keine Sicherung zur Rückstellung gibt.

Aus der EP 2 884 086 A2 ist ein über einen Nocken aktuiertes Abgasrückführventil bekannt. Die Rückstellung erfolgt über eine Feder oder mittels einer mit dem Nocken drehbaren Kurvenbahnkontur.

In der WO 2017/037065 A1 wird ein Ventil offenbart, welches über einen Spindeltrieb translatorisch bewegt wird. Vor den Spindeltrieb ist ein Getriebe mit einem Kronenrad geschaltet.

Bei den bekannten Ventilvorrichtungen ist es nachteilig, dass der Aufbau zur Umwandlung der rotatorischen Bewegung der Antriebswelle in eine translatorische Bewegung der Ventilstange einen hohen Bauraumbedarf benötigt, da die Kurvenbahnkontur groß ausgeführt sein muss, da aufgrund der großen Stellkräfte große Lager verwendet werden müssen. In den alternativen Vorrichtungen, welche einen Nocken aufweisen, gibt es keine Sicherstellung einer Rückstellung im Falle eines Defektes des Federelementes.

Es stellt sich daher die Aufgabe, eine kompakte Ventilvorrichtung zur Umwandlung einer Rotationsbewegung in eine Translationsbewegung zu schaffen, welche den Bauraumbedarf reduziert, ohne den Hub der Ventilstange zu reduzieren. Zusätzlich soll eine mögliche Rückstellung der Ventileinheit auch bei ausfallendem Federelement oder einer zur Rückstellung nicht ausreichenden Federkraft aufgrund von Ablagerungen am Ventilschließglied oder der Ventilstange sichergestellt werden.

Diese Aufgabe wird durch eine Ventilvorrichtung mit den Merkmalen des Hauptanspruchs 1 gelöst. Dadurch, dass ein Nocken zur Erzeugung einer translatorischen Bewegung der Ventileinheit bei Drehung des Aktuators auf die Ventilstange wirkt, der drehfest zum Kronenradsegment angeordnet ist und somit mit dem Kronenradsegment drehbar ist, ist ein großer Hub, entsprechend einer Umwandlung der Rotationsbewegung in eine Translationsbewegung, mit hohem, direktem Kraftübertrag bei einer Vorrichtung mit geringem Bauraum möglich, wobei durch den direkten Kraftübertrag keine Bauteile zur Aufnahme von Querkräften ausgebildet sein müssen. Zusätzlich weist der Nocken ein sehr kleines Ausmaß zur Hubbetätigung aus und kann unmittelbar über Ventilstange angeordnet werden, sodass ein geringer Bauraum notwendig ist. Der Nocken ist an einer Welle ausgebildet, wobei an der Welle das Kronenradsegment befestigt ist, wodurch eine direkte Verbindung zwischen dem Nocken und dem Abtriebsglied des Getriebes vorhanden ist und somit Bauteile eingespart werden. Zusätzlich ist die Welle an ihren beiden Enden gelagert und das Kronenrad und der Nocken zwischen den beiden Lagern angeordnet, wodurch auftretende Querkräfte über die Lager abgeführt werden und eine hohe Stabilität bei geringen notwendigen Wellendurchmessern erreicht wird.

Vorzugsweise wirkt der Nocken auf ein Lager, welches auf einer Achse angeordnet ist, die mit der Ventilstange verbunden ist und senkrecht zu dieser angeordnet ist, wodurch ein geringer Verschleiß und somit eine längere Lebensdauer der Vorrichtung erreicht wird, da kein direkter Reibungskontakt zwischen dem Nocken und der Ventilstange erfolgt.

In einer vorteilhaften Ausführung ist ein U-förmiges Verbindungselement am zum Ventilschließglied gegenüberliegenden Ende der Ventilstange befestigt, wobei die Achse durch die beiden Schenkel des Verbindungselementes ragt und das Lager zwischen den Schenkeln angeordnet ist, da somit die Kräfte des Nockens auf das Lager beidseitig abgefangen werden und das Lager mittig zur Ventilstange ausgerichtet ist.

Vorteilhaft umgibt ein Gehäuse den Aktuator, die Ventilstange und das Federelement, wobei das Federelement die Ventilstange radial umgibt, axial zwischen dem Gehäuse und einem radialen Vorsprung der Ventilstange eingespannt ist und die Ventilstange in Richtung des Nockens belastet, was zu einer schnellen rückstellenden Bewegung der Ventilstange in Richtung des Nockens führt, sobald der Nocken keine Kraft mehr auf das Lager und somit die Ventilstange überträgt. Zusätzlich dient das Federelement als Fail-Safe Element zur Sicherstellung einer Rückstellung der Ventilstange in Richtung des Nockens, so dass das Ventil in eine gewünschte Position bei Ausfall des Elektromotors verfahren werden kann.

Vorzugsweise ist die Welle drehfest mit einer Kurvenscheibe verbunden, sodass keine zusätzlichen Kopplungselemente für die gleichartige Drehung der Kurvenscheibe und der Welle notwendig sind. Die Kurvenscheibe kann zu einer zwangsweisen Rückstellung des Ventils vorteilhaft genutzt werden.

Vorzuziehen ist, dass das Kronenradsegment drehfest auf der Kurvenscheibe befestigt ist, wodurch die Kurvenscheibe nicht als zusätzliches Element hergestellt und montiert werden muss. Somit werden Bauteile eingespart und das Getriebe wird kompakter, da für die Kurvenscheibe kein zusätzlicher Bauraumbedarf entsteht. Auch die Herstellungskosten werden hierdurch gesenkt.

Vorteilhaft ist in der Kurvenscheibe eine Ausnehmung angeordnet, deren Begrenzungswände eine Kurvenbahnkontur bilden, wodurch ermöglicht wird, eine Rückstellkraft entgegen der Nockenkraft aktiv aufzubringen, welche die Federkraft unterstützt. So wird eine geregelte Rückstellung des Ventils ermöglicht. Des Weiteren können Klemmkräfte an der Ventileinheit überwunden werden.

In einer vorteilhaften Ausführung greift die mit der Ventilstange verbundene Achse in die Ausnehmung der Kurvenscheibe, wodurch ein direkter Kraftübertrag der Kurvenbahnkontur über die Achse auf die Ventilstange erreicht wird, wodurch eine Zwangsführung der Ventilstange in Abhängigkeit der Drehstellung des Elektromotors hergestellt werden kann, was die Regelbarkeit des Ventils deutlich verbessert und eine Rückstellung auch für den Fall ermöglicht, dass die Feder bricht.

Vorteilhaft wirkt eine Kraft von der Kurvenbahnkontur über die Achse auf die Ventilstange in Richtung des Nockens bei einer Drehung der Welle in eine den Hub verringernde Drehrichtung, wenn das Kugellager nicht mehr in Anlage zum Nocken ist, womit die Zwangsführung der Ventilstange erreicht und eine Rückstellung der Ventilstange sichergestellt wird, so dass eine zuverlässige Regelbarkeit bei einem Verklemmen des Ventilschließgliedes und somit einer nicht ausreichenden Federkraft für eine Rückstellung der Ventilstange bei einer Bewegung der Ventilstange in Richtung des Nockens erhalten bleibt.

Vorzuziehen ist, dass auf der mit der Ventilstange verbundenen Achse eine Rolle oder ein Wälzlager innerhalb der Kurvenbahnkontur angeordnet ist, da somit Verschleiß und Reibung an den sich relativ zueinander bewegenden Bauteilen reduziert werden, wodurch eine längere Lebensdauer der Vorrichtung erreicht wird.

Vorteilhaft ist an einem mit der Ventilstange verbundenen und mit der Ventilstange bewegten Bauteil ein Magnet angeordnet, der mit einem im Gehäuse angeordneten Sensor zusammenwirkt. Dies ermöglicht eine zuverlässige Lagerückmeldung zur Regelung des Ventils direkt am Abtriebsglied.

Vorzuziehen ist eine Ausführung, in welcher das Getriebe eine Stirnradverzahnung und eine Kronenradverzahnung aufweist, wodurch in einer kompakten Bauweise eine senkrechte Anordnung der Antriebs- und Abtriebsdrehachse zueinander bei hoher möglicher Untersetzung erreicht wird, was die Genauigkeit der Regelung verbessert.

In einer vorteilhaften Ausführung weist ein Antriebszahnrad eine Stirnradverzahnung auf und kämmt mit dem ersten Zahnrad eines Doppelzahnrades, dessen zweites Zahnrad mit dem Kronenradsegment kämmt, wodurch in einer kompakten Bauweise hohe Untersetzungen erreicht werden und der Motor möglichst nah am Abtriebsglied und somit der Ventilstange angeordnet werden kann, was den Bauraumbedarf im Vergleich zu bekannten Ausführungen verringert.

Die Verwendung einer erfindungsgemäßen Ventilvorrichtung für eine Verbrennungskraftmaschine mit einem Kronenradgetriebe und einer Kurvenscheibe sowie einer Nocke ermöglicht insgesamt eine kompakte Bauweise der Vorrichtung, wodurch das Getriebe und der Motor möglichst nah zur Ventilachse angeordnet werden können. Durch die Verwendung der Kurvenscheibe ist eine Zwangsführung für die Rückstellung der Ventilstange möglich, wodurch beispielsweise im Falle eines Verklemmens des Ventilschließgliedes die Ventilstange dennoch zurückgestellt werden kann, ohne dass hierzu zusätzlicher Bauraum benötigt wird. Durch die Trennung der Ventilhubbetätigung mittels des Nockens und der Zwangsführung durch die Kurvenbahnkontur können die Bauteile in ihrer Größe deutlich reduziert werden.

Ein Ausführungsbeispiel einer erfindungsgemäßen Ventilvorrichtung ist in den Figuren dargestellt und wird nachfolgend beschrieben.

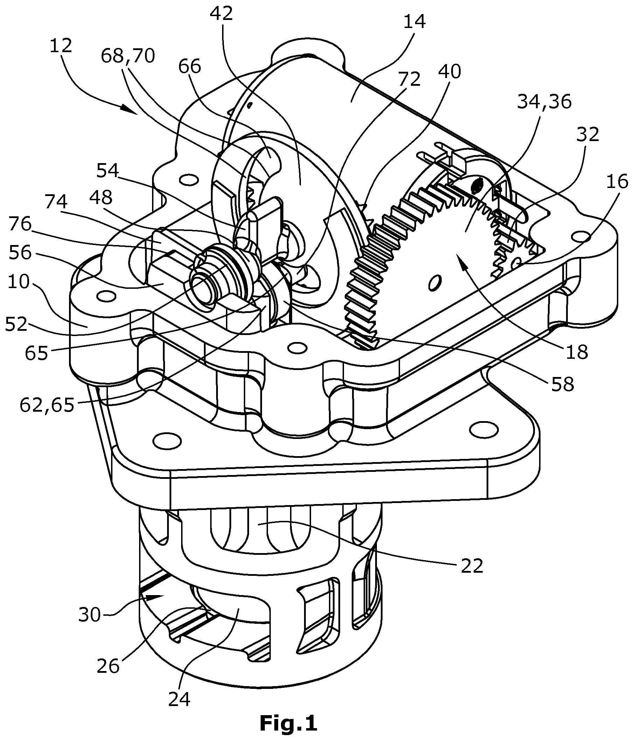

Die Figur 1 zeigt eine Draufsicht einer erfindungsgemäßen Ventilvorrichtung ohne Gehäusedeckel.

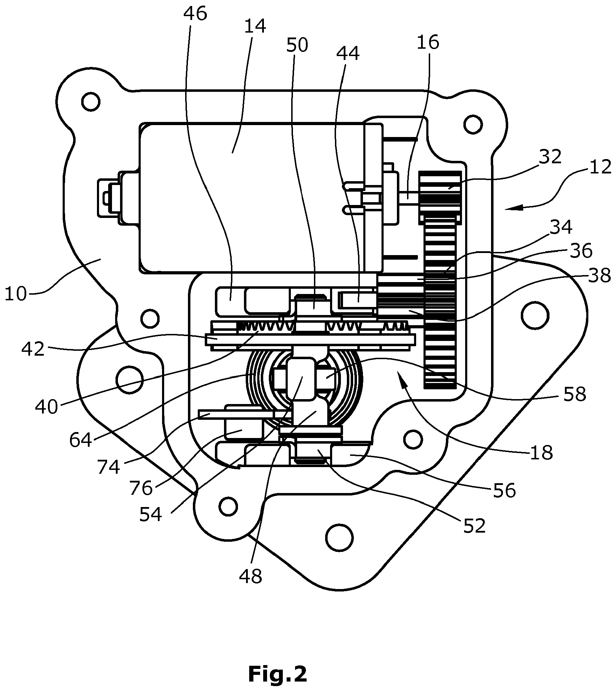

Die Figur 2 zeigt eine Draufsicht der erfindungsgemäßen Ventilvorrichtung aus Figur 1 in einer geschnittenen Darstellung.

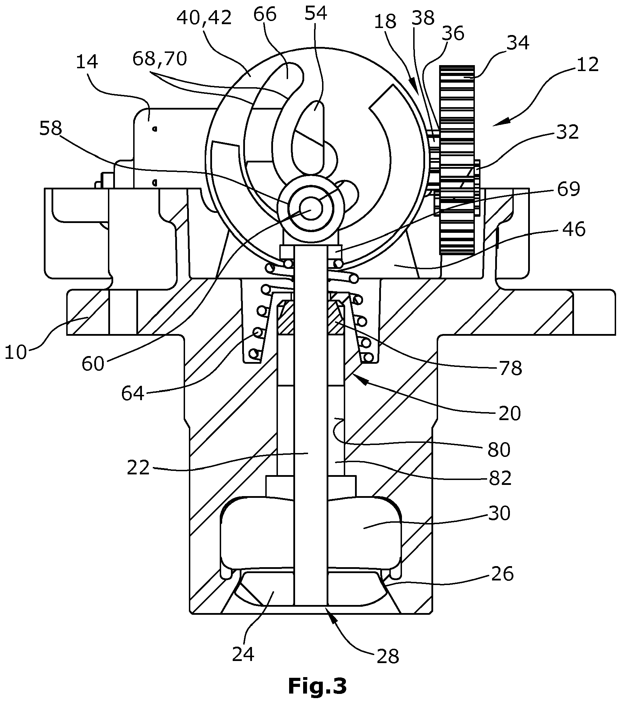

Die Figur 3 zeigt eine Seitenansicht der erfindungsgemäßen Ventilvorrichtung aus Figur 1 in einer geschnittenen Darstellung.

Die Ventilvorrichtung besteht aus einem Gehäuse 10, in welchem ein Aktuator 12, bestehend aus einem Elektromotor 14 mit einer Antriebswelle 16 und einem Getriebe 18 und eine Ventileinheit 20, die eine Ventilstange 22 und ein an der Ventilstange 22 befestigtes Ventilschließglied 24 aufweist, angeordnet sind. Das Ventilschließglied 24 ist mittels des Aktuators 12 auf einen Ventilsitz 26 absenkbar und von diesem abhebbar, um einen Durchströmungsquerschnitt zwischen einem im Gehäuse 10 ausgebildeten Einlass 28 und einem Auslass 30 zu regeln.

Das Getriebe 18 umfasst ein Antriebszahnrad 32, welches auf der Antriebswelle 16 des Elektromotors 14 befestigt ist und in das ein erstes großes Zahnrad 34 eines Doppelzahnrades 36 greift. Ein zweites, kleines Zahnrad 38 des Doppelzahnrades 36 kämmt mit einem Kronenradsegment 40, welches drehfest an einer Kurvenscheibe 42 befestigt ist, deren Drehachse senkrecht zur Drehachse des Doppelzahnrades 36 liegt. Das Doppelzahnrad 36 ist auf einem Achsstift 44 gelagert, wobei der Achsstift 44 an einem ersten Lagerbock 46 befestigt ist, welcher parallel zur Drehachse des Elektromotors 14 und unmittelbar neben dem Elektromotor 14 angeordnet ist.

Auf einer Welle 48 die an ihren beiden Enden in einem ersten Lager 50 und einem zweiten Lager 52 gelagert ist, und auf der die Kurvenscheibe 42 drehfest angeordnet ist, ist ein Nocken 54 ausgebildet, welcher drehfest mit der Welle 48 verbunden oder einstückig mit dieser hergestellt ist. Die beiden Lager 50, 52 sind im vorliegenden Ausführungsbeispiel als Gleitlager gefertigt und sind im ersten Lagerbock 46, in dem auch der Achsstift 44 befestigt ist, und einem zweiten Lagerbock 56, welcher parallel zum ersten Lagerbock 46 auf der dem Elektromotor 14 abgewandten Seite der Welle 48 angeordnet ist, befestigt, so dass Querkräfte über die Lagerböcke 46, 56 auf das Gehäuse 10 abgeführt werden. Somit sind die Welle 48 und die Lagerböcke 46, 56 radial zum Elektromotor 14 ausgerichtet, wodurch eine sehr kompakte Bauweise erreicht wird.

Der Nocken 54 dient zur Ventilhubbetätigung und wirkt auf ein als Kugellager ausgebildetes Lager 58, welches mit der Ventilstange 22 verbunden ist, die senkrecht zu den Drehachsen des Getriebes 18 angeordnet ist. Der Nocken 54 überträgt eine Kraft auf das Kugellager 58, welches auf einer Achse 60 befestigt ist. Die Achse 60 ist senkrecht zur Ventilstange 22 und parallel zur Welle 48 angeordnet und an einem U-förmigen Verbindungselement 62 befestigt, indem die Achse 60 durch zwei Durchgangslöcher innerhalb von Schenkeln 65 des U-förmigen Verbindungselementes 62 ragt und dort beispielsweise durch Schweißen oder eine Presspassung fixiert ist. Das U-förmige Verbindungselement 62 ist entweder einstückig mit der Ventilstange 22 gefertigt oder fest mit dieser verbunden und befindet sich am zum Ventilschließglied 24 gegenüberliegenden Ende der Ventilstange 22. Das Kugellager 58 ist zwischen den beiden Schenkeln 65 des U-förmigen Verbindungselementes 62 befestigt, wodurch es mittig zur Ventilstange 22 und zum Nocken 54 ausgerichtet ist. Entsprechend erfolgt durch Betätigung des Nockens 24 eine Hubbewegung der Ventileinheit 20, die vom Kugellager 58 auf die Achse 60 und über das U-förmige Verbindungselement 62 auf die Ventilstange 22 und damit auf das Ventilschließglied 24 übertragen wird. Zur Rückstellung weist die Ventilvorrichtung ein Federelement 64 auf, welches die Ventilstange 22 radial umgibt und axial zwischen dem Gehäuse 10 und der dem Nocken 54 abgewandten Seite des U-förmigen Verbindungselementes 62, welches als radialer Vorsprung 69, der Ventilstange 22 dient, eingespannt ist, wodurch die Ventilstange 22 in Richtung des Nockens 24 belastet ist und gegen diesen vorgespannt wird.

Durch eine Drehung der Antriebswelle 16 des Elektromotors 14 wird die Drehbewegung jedoch nicht nur über das Doppelzahnrad 36 und das Kronenradsegment 40 auf die Welle 48 und den Nocken 54 übertragen, sondern auch auf die Kurvenscheibe 42 übertragen.

Die Kurvenscheibe 42, auf der das Kronenradsegment 40 angeordnet ist, weist eine Ausnehmung 66 auf, wobei Begrenzungswände 68 der Ausnehmung 66 eine Kurvenbahnkontur 70 bilden. In diese Kurvenbahnkontur 70 greift die Achse 60 mit dem zur Kurvenscheibe 42 weisenden Ende außerhalb des U-förmigen Verbindungselementes 62 ein, wodurch ein Kraftübertrag zwischen der Achse 60 und der Kurvenbahnkontur 70 hergestellt werden kann. Die Begrenzungswände 68 weisen dabei einen Abstand zueinander auf, welcher größer ist als die radiale Größe der Achse 60 beziehungsweise einer auf der Achse 60 innerhalb der Kurvenbahnkontur 70 anzuordnenden Rolle 72. Somit ist die Achse 60 zwischen den Begrenzungswänden 68 beweglich, Insbesondere bei einer Betätigung durch den Nocken 54. Der Abstand ist notwendig, damit es zu keiner Beschädigung durch eine Fehlausrichtung des Nockens 54 zur Kurvenbahnkontur 70 kommt, wodurch beispielsweise die Achse 60 durch den Nocken 54 gegen die Begrenzungswände 68 gedrückt werden würde, was zu einem Klemmen der Ventilvorrichtung führen würde.

Am zur Kurvenscheibe 42 gegenüberliegenden Ende der Achse 60 ist eine mit der Achse 60 fest verbundene Platte 74 befestigt, die entsprechend mit der Achse 60 und somit mit der Ventilstange 22 bewegt wird. Die Platte ist entsprechend senkrecht zur Achse 60 an der der Kurvenscheibe 42 gegenüberliegenden Seite des U-förmigen Verbindungselementes 62 ausgebildet. An der Platte 74 ist ein Magnet 76 befestigt, welcher zur Lageerfassung mit einem nicht dargestellten berührungslosen, beispielsweise magnetoresistiven Sensor kommuniziert, der im Gehäuse 10 beziehungsweise auf einer Platine im Gehäuse 10 oder einem das Gehäuse 10 verschließenden Gehäusedeckel befestigt ist.

Zur Abdichtung der Ventilstange 22 im Gehäuse 10 zum Einlass 28 beziehungsweise zum Auslass 30 sind zwei Dichtringe 78 in einer Bohrung 80 des Gehäuses 10 befestigt, in der auch eine Führungsbuchse 82 angeordnet ist, über die die Ventilstange 22 gelagert wird. Die Dichtringe 78 sind so befestigt, dass sie die Ventilstange 22 radial umschließen, um einen Gasstrom entlang der Ventilstange 22 zum Aktuator 12 verhindern.

Im Betrieb der Ventilvorrichtung drehen sich bei Bestromung des Elektromotors 14 die Kurvenscheibe 42 und der Nocken 54. Der Nocken 54 überträgt eine Kraft auf das Kugellager 58 und somit über die Achse 60 und das U-förmige Verbindungselement 62 auf die Ventilstange 22 in eine zur Kraft des Federelementes 64 entgegengesetzte Richtung, was zu einem Ventilhub führt. Dabei befindet sich die Achse 60 in der Ausnehmung 66 der Kurvenscheibe 42, ohne deren Begrenzungswände 68 zu berühren.

Bei einer Drehung der Welle 48 in eine den Hub verringernde Drehrichtung, wird das Kugellager 58 durch das Federelement 64 gegen den Nocken 54 belastet, sodass die Ventilstange 22 der Bewegung des Nockens 54 folgt. Falls das Federelement 64 jedoch keine ausreichende Rückstellkraft aufbringen sollte, weil beispielsweise Ablagerungen zwischen dem Ventilsitz 26 und dem Ventilschließglied 24 ein Öffnen verhindern, entsteht eine Zwangsführung der Ventileinheit 20 beim Zurückdrehen des Nockens 24, wenn das Kugellager 58 den Nocken 54 nicht mehr berührt. In dieser Situation wird durch eine weitere Drehung der Welle 48 in eine den Hub verringernde Drehrichtung eine Kraft durch den Eingriff der Achse 60 in die Kurvenbahnkontur 70 und deren Berührung mit der radial äußeren Begrenzungswand 68 auf die Ventilstange 22 übertragen. So kann bei nicht ausreichender Federkraft eine zusätzliche Öffnungskraft und eine aktive Rückstellung über den Aktuator 12 erfolgen. Durch die Lageerfassung durch den Magneten 76 kann eine solche Verklemmung auch erfasst werden.

Durch die Trennung der Kurvenbahnkontur zur Zwangsführung in einer Situation, in welcher das Federelement keine ausreichende Kraft aufbringt, und des Nockens zur Ventilhubbetätigung wird eine äußerst kompakte Bauweise erreicht, da die Kurvenbahnkontur innerhalb der Kurvenscheibe integriert ist und die Kurvenscheibe aufgrund relativ geringer zu übertragender Kräfte deutlich kleiner ausgeführt werden kann, als bei Betätigung des Ventils durch die Kurvenbahnkontur in beide Richtungen, da sie nur zur zwangsweisen Rückstellung eine zur Federkraft zusätzliche Kraft aufbringen muss. Die Kurvenbahnkontur wird nicht für eine Ventilhubbetätigung genutzt, da hierfür große Stellkräfte notwendig sind, wodurch große Lager zu verwenden wären, die auch eine Vergrößerung der Kurvenscheibe nach sich ziehen würden. Zusätzlich weist der Nocken eine radial kleinere Ausdehnung auf, als die Kurvenbahnkontur, wodurch kein zusätzlicher radialer Bauraum benötigt wird. Die Kronenradverzahnung ermöglicht eine kompakte Anordnung des Motors zum Getriebe und zur Ventilstange, wodurch diese Bauteile nahe um die Ventilschwerpunktsachse angeordnet sind. Es werden Bauteile eingespart, da beispielsweise das Kronenradsegment auf der Kurvenscheibe befestigt ist, wodurch insgesamt Bauraum und Material und somit Kosten eingespart werden und eine leichtere Montage ermöglicht ist.

Es sollte deutlich sein, dass verschledene konstruktive Modificationen im Vergleich zu der beschriebenen Ausrunrungsrorm moglich sind, onne aen Schutzbereich des Hauptansprucns zu verlassen.

## Patentansprüche

1. Ventilvorrichtung für eine Verbrennungskraftmaschine mit einem Aktuator (12), der einen Elektromotor (14), ein Getriebe (18) mit einem Kronenradsegment (40) und ein Federelement (64) aufweist sowie einer Ventileinheit (20) mit einer Ventilstange (22) und einem auf der Ventilstange (22) angeordneten Ventilschließglied (24), welches mit einem Ventilsitz (26) zusammenwirkt, der einen Durchströmungsquerschnitt zwischen einem Einlass (28) und einem Auslass (30) begrenzt,
**dadurch gekennzeichnet, dass**
ein Nocken (54) zur Erzeugung einer translatorischen Bewegung der Ventileinheit (20) bei Drehung des Aktuators (12) auf die Ventilstange (22) wirkt, der drehfest zum Kronenradsegment (40) angeordnet ist, wobei der Nocken (54) an einer Welle (48) ausgebildet ist, an der das Kronenradsegment (40) befestigt ist und wobei die Welle (48) an ihren beiden Enden gelagert ist und das Kronenradsegment (40) und der Nocken (54) zwischen den beiden Lagern (50, 52) angeordnet sind.

2. Ventilvorrichtung für eine Verbrennungskraftmaschine nach Anspruch 1,
**dadurch gekennzeichnet, dass**
der Nocken (54) auf ein Lager (58) wirkt, welches auf einer Achse (60) angeordnet ist, die mit der Ventilstange (22) verbunden ist und senkrecht zur Ventilstange (22) angeordnet ist.

3. Ventilvorrichtung für eine Verbrennungskraftmaschine nach Anspruch 2,
**dadurch gekennzeichnet, dass**
ein U-förmiges Verbindungselement (62) am zum Ventilschließglied (24) gegenüberliegenden Ende der Ventilstange (22) befestigt ist, wobei die Achse (60) durch die beiden Schenkel (65) des Verbindungselementes (62) ragt und das Lager (58) zwischen den Schenkeln (65) angeordnet ist.

4. Ventilvorrichtung für eine Verbrennungskraftmaschine nach einem der vorhergehenden Ansprüche,
**dadurch gekennzeichnet, dass**
ein Gehäuse (10) den Aktuator (12), die Ventilstange (22) und das Federelement (64) umgibt, wobei das Federelement (64) die Ventilstange (22) radial umgibt, axial zwischen dem Gehäuse (10) und einem radialen Vorsprung (69) der Ventilstange (22) eingespannt ist und die Ventilstange (22) in Richtung des Nockens (54) belastet.

5. Ventilvorrichtung für eine Verbrennungskraftmaschine nach einem der vorhergehenden Ansprüche,
**dadurch gekennzeichnet, dass**
die Welle (48) drehfest mit einer Kurvenscheibe (42) verbunden ist.

6. Ventilvorrichtung für eine Verbrennungskraftmaschine nach Anspruch 5,
**dadurch gekennzeichnet, dass**
das Kronenradsegment (40) drehfest auf der Kurvenscheibe (42) befestigt ist.

7. Ventilvorrichtung für eine Verbrennungskraftmaschine nach einem der Ansprüche 5 oder 6,
**dadurch gekennzeichnet, dass**
in der Kurvenscheibe (42) eine Ausnehmung (66) ausgebildet ist, deren Begrenzungswände (68) eine Kurvenbahnkontur (70) bilden.

8. Ventilvorrichtung für eine Verbrennungskraftmaschine nach den Ansprüchen 2 und 7,
**dadurch gekennzeichnet, dass**
die mit der Ventilstange (22) verbundene Achse (60) in die Ausnehmung (66) der Kurvenscheibe (42) greift.

9. Ventilvorrichtung für eine Verbrennungskraftmaschine nach Anspruch 2 und einem der Ansprüche 7 oder 8,
**dadurch gekennzeichnet, dass**
bei Drehung der Welle (48) in einer den Hub verringernden Drehrichtung, eine Kraft von der Kurvenbahnkontur (70) über die Achse (60) auf die Ventilstange (22) in Richtung des Nockens (54) wirkt, wenn das Lager (58) nicht mehr in Anlage zum Nocken (54) ist.

10. Ventilvorrichtung für eine Verbrennungskraftmaschine nach Anspruch 2 und einem der Ansprüche 7 bis 9,
**dadurch gekennzeichnet, dass**
auf der mit der Ventilstange (22) verbundenen Achse (60) eine Rolle (72) oder ein Wälzlager innerhalb der Kurvenbahnkontur (70) angeordnet ist.

11. Ventilvorrichtung für eine Verbrennungskraftmaschine nach einem der vorhergehenden Ansprüche,
**dadurch gekennzeichnet, dass**
an einem mit der Ventilstange (22) verbundenen und mit der Ventilstange (22) bewegtem Bauteil (74) ein Magnet (76) angeordnet ist, der mit einem im Gehäuse (10) angeordneten Sensor zusammenwirkt.

12. Ventilvorrichtung für eine Verbrennungskraftmaschine nach einem der vorhergehenden Ansprüche,
**dadurch gekennzeichnet, dass**
das Getriebe (18) eine Stirnradverzahnung und eine Kronenradverzahnung aufweist.

13. Ventilvorrichtung für eine Verbrennungskraftmaschine nach einem der vorhergehenden Ansprüche,
**dadurch gekennzeichnet, dass**
ein Antriebszahnrad (32) eine Stirnradverzahnung aufweist und mit einem ersten Zahnrad (34) eines Doppelzahnrades (36) kämmt, dessen zweites Zahnrad (38) mit dem Kronenradsegment (40) kämmt.

## Claims

1. Valve device for an internal combustion engine, having an actuator (12) which comprises an electric motor (14), a transmission (18) with a crown wheel segment (40) and a spring element (64), and a valve unit (20) with a valve rod (22) and a valve closure member (24) which is arranged at the valve rod (22) and interacts with a valve seat (26) and defines a flow cross-section between an inlet (28) and an outlet (30),
**characterised in that**
a cam (54) acts on the valve rod (22) to generate a translatory movement of the valve unit (20) when the actuator (12) is rotated, which cam is arranged non-rotatably relative to the crown wheel segment (40), wherein the cam (54) is configured at a shaft (48) to which the crown wheel segment (40) is attached and wherein the shaft (48) is beared at its two ends and the crown wheel segment (40) and the cam (54) are arranged between the two bearings (50, 52).

2. Valve device for an internal combustion engine according to claim 1,
**characterised in that**
the cam (54) acts on a bearing (58) which is arranged on an axle (60) which is connected to the valve rod (22) and is arranged perpendicular to the valve rod (22).

3. Valve device for an internal combustion engine according to claim 2,
**characterised in that**
a U-shaped connecting element (62) is attached to the end of the valve rod (22) opposite the valve closure member (24), wherein the axle (60) projects through the two legs (65) of the connecting element (62) and the bearing (58) is arranged between the legs (65).

4. Valve device for an internal combustion engine according to one of the preceding claims,
**characterised in that**
a housing (10) surrounds the actuator (12), the valve rod (22) and the spring element (64), wherein the spring element (64) radially surrounds the valve rod (22), is axially clamped between the housing (10) and a radial projection (69) of the valve rod (22) and biases the valve rod (22) in the direction of the cam (54).

5. Valve device for an internal combustion engine according to one of the preceding claims,
**characterised in that**
the shaft (48) is non-rotatably connected to a cam disc (42).

6. Valve device for an internal combustion engine according to claim 5,
**characterised in that**
the crown wheel segment (40) is non-rotatably attached to the cam disc (42).

7. Valve device for an internal combustion engine according to one of claims 5 or 6,
**characterised in that**
a recess (66) is configured in the cam disc (42), the boundary walls (68) of which define a cam track contour (70).

8. Valve device for an internal combustion engine according to claims 2 and 7,
**characterised in that**
the axle (60) connected to the valve rod (22) engages in the recess (66) of the cam disc (42).

9. Valve device for an internal combustion engine according to claim 2 and one of claims 7 or 8,
**characterised in that**
when the shaft (48) rotates in a direction of rotation that reduces the stroke, a force acts from the cam track contour (70) via the axis (60) on the valve rod (22) in the direction of the cam (54) when the bearing (58) is no longer in contact with the cam (54).

10. Valve device for an internal combustion engine according to claim 2 and one of claims 7 to 9,
**characterised in that**
a roller (72) or a rolling bearing is arranged within the cam track contour (70) on the shaft (60) connected to the valve rod (22).

11. Valve device for an internal combustion engine according to one of the preceding claims,
**characterised in that**
a magnet (76) is arranged on a component (74) connected to the valve rod (22) and is moved with the valve rod (22), which magnet co-operates with a sensor arranged in the housing (10).

12. Valve device for an internal combustion engine according to one of the preceding claims,
**characterised in that**
the transmission (18) comprises a spur gear and a crown gear.

13. Valve device for an internal combustion engine according to one of the preceding claims,
**characterised in that**
a drive gear (32) comprises a spur gear toothing and meshes with a first gear (34) of a double gear (36), the second gear (38) of which meshes with the crown gear segment (40).

## Revendications

1. Dispositif de vanne pour un moteur à combustion interne, comprenant un actionneur (12) qui comprend un moteur électrique (14), une transmission (18) avec un segment de couronne (40) et un élément de suspension (64), ainsi qu'une unité de vanne (20) avec une tige de vanne (22) et un organe de fermeture de vanne (24) disposé sur la tige de vanne (22), qui coopère avec un siège de vanne (26) qui délimite une section transversale d'écoulement entre une entrée (28) et une sortie (30),
**caractérisé en ce que**
une came (54) destinée à générer un mouvement de translation de l'unité de vanne (20) lors de la rotation de l'actionneur (12) agit sur la tige de vanne (22), qui est disposée de manière à ne pas pouvoir tourner par rapport au segment de couronne (40), la came (54) étant formée sur un arbre (48) sur lequel est fixé le segment de couronne (40), l'arbre (48) étant supporté à ses deux extrémités et le segment de couronne (40) et la came (54) étant disposés entre les deux paliers (50, 52).

2. Dispositif de vanne pour un moteur à combustion interne selon la revendication 1,
**caractérisé en ce que**
la came (54) agit sur un palier (58) disposé sur un axe (60) relié à la tige de vanne (22) et disposé perpendiculairement à la tige de vanne (22).

3. Dispositif de vanne pour un moteur à combustion interne selon la revendication 2,
**caractérisé en ce que**
un élément de liaison (62) en forme de U est fixé à l'extrémité de la tige de vanne (22) opposée à l'organe de fermeture de vanne (24), l'axe (60) s'étendant à travers les deux branches (65) de l'élément de liaison (62) et le palier (58) étant disposé entre les branches (65).

4. Dispositif de vanne pour un moteur à combustion interne selon l'une des revendications précédentes,
**caractérisé en ce que**
un boîtier (10) entoure l'actionneur (12), la tige de soupape (22) et l'élément de suspension (64), l'élément de suspension (64) entourant radialement la tige de vanne (22), étant serré axialement entre le boîtier (10) et une projection radiale (69) de la tige de vanne (22) et poussant la tige de vanne (22) en direction de la came (54).

5. Dispositif de vanne pour moteur à combustion interne selon l'une des revendications précédentes,
**caractérisé en ce que**
l'arbre (48) est solidaire en rotation avec un disque à came (42).

6. Dispositif de vanne pour moteur à combustion interne selon la revendication 5,
**caractérisé en ce que**
le segment de couronne (40) est fixé en rotation sur le disque à came (42).

7. Dispositif de vanne pour moteur à combustion interne selon l'une des revendications 5 ou 6,
**caractérisé en ce que**
un évidement (66) est formé dans le disque à came (42), dont les parois de délimitation (68) forment un contour de chemin de came (70).

8. Dispositif de vanne pour un moteur à combustion interne selon les revendications 2 et 7,
**caractérisé en ce que**
l'axe (60) relié à la tige de vanne (22) s'engage dans l'évidement (66) du disque à came (42).

9. Dispositif de vanne pour moteur à combustion interne selon la revendication 2 et l'une des revendications 7 ou 8,
**caractérisé en ce que**
lors de la rotation de l'arbre (48) dans un sens de rotation réduisant la course, une force est exercée par le contour de came (70), via l'axe (60), sur la tige de vanne (22) en direction de la came (54), lorsque le palier (58) n'est plus en appui sur la came (54).

10. Dispositif de vanne pour moteur à combustion interne selon la revendication 2 et l'une quelconque des revendications 7 à 9,
**caractérisé en ce que**
un rouleau (72) ou un palier à roulement est disposé sur l'axe (60) relié à la tige de vanne (22) à l'intérieur du contour de came (70).

11. Dispositif de vanne pour moteur à combustion interne selon l'une des revendications précédentes,
**caractérisé en ce que**
un aimant (76) est disposé sur un composant (74) relié à la tige de vanne (22) et déplacé avec la tige de vanne (22), lequel aimant coopère avec un capteur disposé dans le boîtier (10).

12. Dispositif de vanne pour un moteur à combustion interne selon l'une des revendications précédentes,
**caractérisé en ce que**
la transmission (18) comprend une denture d'engrenage droit et une denture d'engrenage en couronne.

13. Dispositif de vanne pour un moteur à combustion interne selon l'une des revendications précédentes,
**caractérisé en ce que**
une roue dentée d'entraînement (32) comprend une denture droite et engrène avec une première roue dentée (34) d'une roue dentée double (36) dont la deuxième roue dentée (38) engrène avec le segment de couronne (40).
